# EUROPEAN PATENT APPLICATION

(11) **EP 4 443 592 A1**
(43) Date of publication of application: **09.10.2024**
(21) Application number: 23740521.2
(22) Date of filing: 13.01.2023
(51) Int. Cl.: H01M 10/058, H01M 10/0583, H01M 10/0565, H01M 10/04, H01M 50/449, H01M 10/052, H01M 10/0568, H01M 10/0567, H01M 50/46

(54) **SECONDARY BATTERY AND MANUFACTURING METHOD THEREFOR**

(30) Priority: 14.01.2022 KR 20220006030; 14.01.2022 KR 20220006033
(71) Applicant: LG Energy Solution, Ltd., Seoul 07335 (KR)
(72) Inventor: RYU, Ji Hoon, Daejeon 34122 (KR); KIM, Je Young, Daejeon 34122 (KR); KIM, Dong Kyu, Daejeon 34122 (KR); YOON, Yeo Min, Daejeon 34122 (KR); CHOI, Seong Won, Daejeon 34122 (KR); SHIN, Won Kyung, Daejeon 34122 (KR); LIM, Tae Seob, Daejeon 34122 (KR)
(74) Representative: Hoffmann Eitle
(86) International application number: PCT/KR2023/000698
(87) International publication number: WO 2023/136678

(57) **Abstract**

The present invention relates to a secondary battery which includes an electrode assembly including an electrode and a separator which are alternately stacked; a gel polymer electrolyte; and a battery case accommodating the electrode assembly and the gel polymer electrolyte, wherein the separator includes a porous substrate and a ceramic coating layer disposed on both sides of the porous substrate, and the ceramic coating layer contains 92 wt% or more and less than 100 wt% of inorganic particles and greater than 0 wt% and equal to or less than 8 wt% of a binder.

## Description

### CROSS-REFERENCE TO RELATED APPLICATIONS

This application claims priority from Korean Patent Application Nos. 10-2022-0006030, filed on January 14, 2022, and 10-2022-0006033, filed on January 14, 2022, the disclosures of which are incorporated by reference herein.

### TECHNICAL FIELD

The present disclosure relates to a secondary battery and a preparation method thereof.

### BACKGROUND ART

Demand for secondary batteries as an energy source has been significantly increased as technology development and demand with respect to electronic devices have increased, and, among these secondary batteries, lithium secondary batteries having high energy density and high voltage have been commercialized and widely used.

The secondary battery, for example, may be prepared by accommodating an electrode assembly, in which an electrode and a separator are alternately stacked, in a battery case, injecting an electrolyte solution into the battery case, and sealing the battery case.

In one case, a ceramic coating layer containing inorganic particles and a binder is formed on both sides of a porous substrate, and is generally used as the separator. It is common that a large amount of the binder is included for easy adhesion between the electrode and the separator, wherein, in this case, there is a problem in that resistance is increased due to the use of excessive amount of the binder and the energy density of the battery is reduced due to an increase in thickness of the separator.

In a case in which the amount of the binder in the ceramic coating layer included in the separator is decreased in order to prevent the above-described problem, there is a risk of quality degradation such as misalignment of the electrode and a reduction in stiffness of the cell due to a decrease in adhesion between the electrode and the separator.

In this respect, there is a need to develop a secondary battery with improved cell stiffness and reduced resistance at the same time.

### TECHNICAL PROBLEM

An aspect of the present invention provides a secondary battery in which resistance of the secondary battery is reduced and, simultaneously, cell stiffness and mechanical durability are improved at the same time.

Another aspect of the present invention provides a method of preparing a secondary battery in which resistance of the secondary battery is reduced and, simultaneously, cell stiffness and mechanical durability are improved at the same time.

### TECHNICAL SOLUTION

An aspect of the present invention provides a secondary battery which includes an electrode assembly including an electrode and a separator which are alternately stacked; a gel polymer electrolyte; and a battery case accommodating the electrode assembly and the gel polymer electrolyte, wherein the separator includes a porous substrate and a ceramic coating layer disposed on both sides of the porous substrate, and the ceramic coating layer contains 92 wt% or more and less than 100 wt% of inorganic particles and greater than 0 wt% and equal to or less than 8 wt% of a binder.

Also, an aspect of the present invention provides a method of preparing a secondary battery which includes the steps of accommodating an electrode assembly in a battery case; injecting a gel polymer electrolyte composition into the battery case; curing the gel polymer electrolyte composition; and sealing the battery case, wherein the electrode assembly includes a first electrode and a second electrode which are alternately stacked and a separator disposed between the plurality of electrodes, wherein the separator is folded in a zigzag shape to surround any one end of the first electrode and any one end of the second electrode, and the separator includes a porous substrate and a ceramic coating layer disposed on both sides of the porous substrate, wherein the ceramic coating layer contains 92 wt% or more and less than 100 wt% of inorganic particles and greater than 0 wt% and equal to or less than 8 wt% of a binder, and the electrode assembly is prepared by a method including steps (a) to (d).
(a) disposing the first electrode on the separator;
(b) covering the first electrode by folding one side of the separator;
(c) disposing the second electrode on a surface opposite to a surface of the separator where the separator and the first electrode are in contact with each other; and
(d) covering the second electrode by folding another side of the separator.

### ADVANTAGEOUS EFFECTS

A secondary battery according to an aspect of the present invention is characterized in that it includes an electrode assembly, in which an electrode and a separator are alternately stacked, and a gel polymer electrolyte, wherein a ceramic coating layer included in the separator contains inorganic particles and a binder in a specific amount. Since the ceramic coating layer included in the separator contains a small amount of the binder, an increase in resistance due to an excessive amount of the binder may be prevented and the gel polymer electrolyte may compensate for a decrease in cell stiffness of the secondary battery which is accompanied by such a decrease in resistance. Thus, the secondary battery according to an aspect of the present invention may reduce the resistance of the secondary battery and may simultaneously improve cell stiffness and mechanical durability according to a combination of the above components.

Also, a method of preparing a secondary battery according to an aspect of the present invention is characterized in that it is a method of preparing a secondary battery which includes a gel polymer electrolyte and an electrode assembly including a plurality of electrodes and a separator folded in a zigzag shape while being disposed between the electrodes, wherein a ceramic coating layer included in the separator contains inorganic particles and a binder in a specific amount. Since the ceramic coating layer included in the separator contains a small amount of the binder, an increase in resistance due to an excessive amount of the binder may be prevented and the gel polymer electrolyte may compensate for a decrease in cell stiffness of the secondary battery which is accompanied by such a decrease in resistance. Thus, the secondary battery prepared by the method of preparing a secondary battery according to an aspect of the present invention may reduce the resistance of the secondary battery and may simultaneously improve cell stiffness and mechanical durability according to a combination of the above components.

### BRIEF DESCRIPTION OF THE DRAWINGS

FIG. 1 is a schematic side view of a secondary battery according to an embodiment of the present invention.
FIG. 2 is a schematic side view of an electrode assembly included in the secondary battery according to the embodiment of the present invention.
FIG. 3 is a schematic side view of a separator included in the secondary battery according to the embodiment of the present invention.
FIG. 4 is a schematic side view of an electrode assembly included in a secondary battery according to another embodiment of the present invention.
FIG. 5 is a plan view of a separator or electrodes for explaining an adhesive application trace included in the secondary battery according to the another embodiment of the present invention.
FIG. 6 is a schematic side view of an electrode assembly included in a secondary battery according to another embodiment of the present invention.
FIG. 7 is a view for explaining a method of preparing a secondary battery according to an embodiment of the present invention.
FIG. 8 is a view for explaining the method of preparing a secondary battery according to an embodiment of the present invention.
FIG. 9 is a view for explaining the method of preparing a secondary battery according to an embodiment of the present invention.
FIG. 10 is a view for explaining the method of preparing a secondary battery according to an embodiment of the present invention.
FIG. 11 is a photograph of a surface of a separator included in a secondary battery of Example 1.
FIG. 12 is a photograph of a surface of a separator included in a secondary battery of Comparative Example 1.

### DETAILED DESCRIPTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

An average particle diameter (D₅₀) in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from submicrons to a few mm and may obtain highly repeatable and high-resolution results.

Hereinafter, embodiments of a secondary battery of the present invention will be described in detail with reference to the drawings. In adding reference numerals to components of each drawing, it should be noted that the same reference numerals may be assigned to the same components as much as possible even though they are shown in different drawings. In addition, in describing the present invention, when it is determined that a detailed description of a related known configuration or function may obscure the gist of the present invention, the detailed description thereof will be omitted.

### <Secondary Battery>

An embodiment of the present invention relates to a secondary battery, specifically, a lithium secondary battery.

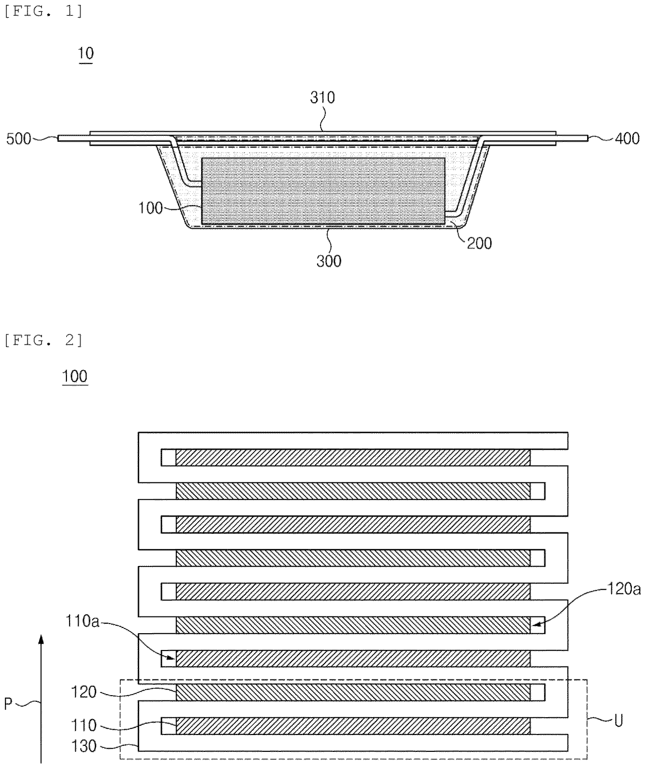

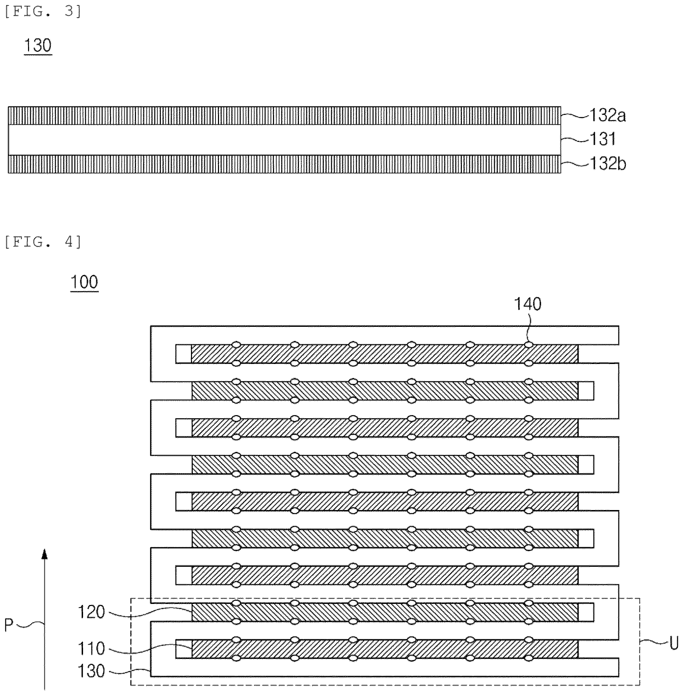

Hereinafter, a secondary battery according to an embodiment of the present invention will be described with reference to FIGS. 1 to 3. Specifically, FIG. 1 is a schematic side view for explaining the secondary battery according to the embodiment of the present invention, FIG. 2 is a schematic side view for explaining an electrode assembly included in the secondary battery according to the embodiment of the present invention, and FIG. 3 is a schematic side view for explaining a separator included in the secondary battery according to the embodiment of the present invention.

Referring to FIGS. 1 to 3, a secondary battery 10 according to an embodiment of the present invention is characterized in that it includes an electrode assembly 100 including electrodes 110 and 120 and a separator 130 which are alternately stacked; a gel polymer electrolyte 200; and a battery case 300 accommodating the electrode assembly 100 and the gel polymer electrolyte 200, wherein the separator 130 includes a porous substrate 131 and ceramic coating layers 132a and 132b disposed on both sides of the porous substrate 131, and the ceramic coating layers 132a and 132b contain 92 wt% or more and less than 100 wt% of inorganic particles and greater than 0 wt% and equal to or less than 8 wt% of a binder.

### Electrode Assembly 100

For convenience of explanation, FIG. 1 briefly illustrates the electrode assembly 100, and a more detailed structure of the electrode assembly 100 is illustrated in FIG. 2.

The electrode assembly 100 includes electrodes 110 and 120 and a separator 130. In this case, the electrodes 110 and 120 and the separator 130 may be alternately stacked.

The electrode assembly 100 may include a plurality of electrodes 110 and 120 stacked in a vertical direction. The number of the electrodes 110 and 120 may be two or more. The expression "vertical direction" in the present specification may mean a vertical direction relative to the ground, wherein the vertical direction is only for describing a stacking direction of the electrodes and is not intended to limit an angle of the stacking direction.

Specifically, the electrodes 110 and 120 are plural in number, the plurality of electrodes 110 and 120 are stacked in a vertical direction, and the separator 130 may be folded in a zigzag shape to surround any one end of the electrodes 110 and 120.

The electrodes 110 and 120 may include the first electrode 110 and the second electrode 120. As shown in FIG. 1, the first electrode 110 and the second electrode 120 may be alternately stacked with the separator 130 disposed therebetween. The first electrode 110 may be a positive electrode, and the second electrode 120 may be a negative electrode. Also, the first electrode 110 may be a negative electrode, and the second electrode 120 may be a positive electrode. The number of the first electrodes and the number of the second electrodes each may be one or more, specifically, two or more.

The electrode assembly 100 may be a stack-type electrode assembly in which one or more, specifically, two or more basic units are stacked, in which the first electrode 110, the separator 130, the second electrode 120, and the separator 130 are sequentially stacked. Also, the electrode assembly may be a zigzag stack-type electrode assembly in which the separator is folded or folded in a zigzag shape such that one or more, specifically, two or more basic units are stacked, in which the first electrode, the separator, the second electrode, and the separator are sequentially stacked.

The first electrode 110 and the second electrode 120 may have a structure in which an active material slurry is coated on a current collector. The first electrode 110 and the second electrode 120 may have a structure which is formed by coating the active material slurry on both sides of the current collector and drying and rolling the coated current collector. The active material slurry may be formed by stirring in a state where a granular active material, a conductive agent, a binder, and the like are added to a solvent. An active material, a conductive agent, a binder, or a thickener used in a positive electrode or negative electrode in the art may be used in first electrode 110 and the second electrode 120 without limitation.

The current collector is not particularly limited so long as it has high conductivity without causing adverse chemical changes in the battery. Specifically, the current collector may include at least one selected from the group consisting of copper, stainless steel, aluminum, nickel, titanium, fired carbon, and an aluminum-cadmium alloy. For example, in a case in which the electrodes 110 and 120 are positive electrodes, the current collector used in the electrodes 110 and 120 may include aluminum, and, in a case in which the electrodes 110 and 120 are negative electrodes, the current collector used in the electrodes 110 and 120 may include copper.

The current collector may be used in various shapes such as a film, a sheet, a foil, a net, a porous body, a foam body, a non-woven fabric body, and the like. Also, the current collector may include a polymer layer and a metal layer disposed on both surfaces of the polymer layer, wherein the metal layer may include at least one selected from the group consisting of copper, stainless steel, aluminum, nickel, titanium, fired carbon, and an aluminum-cadmium alloy.

Specifically, in the case that the electrodes 110 and 120 are negative electrodes, as a negative electrode active material included therein, for example, a compound capable of reversibly intercalating and deintercalating lithium may be used. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Furthermore, specifically, in the case that the electrodes 110 and 120 are positive electrodes, a positive electrode active material included therein is not particularly limited, and, for example, the positive electrode active material may be a commonly used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₂; nickel (Ni)-site type lithium nickel oxide expressed by a chemical formula of LiNi_{2-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of lithium (Li) being substituted with alkaline earth metal ions, but the positive electrode active material is not limited thereto. The positive electrode may be Li-metal.

The binder included in the electrode may be any one binder polymer selected from the group consisting of polyvinylidene fluoride polymer, polyvinyl alcohol, styrene butadiene rubber, polyethylene oxide, carboxyl methyl cellulose, cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, ethylene-co-vinyl acetate, polyarylate, and low molecular weight compounds having a molecular weight of 10,000 g/mol or less or a mixture of two or more thereof.

The conductive agent included in the electrode is not particularly limited as long as it has conductivity without causing adverse chemical changes in the battery, and, for example, a conductive material, such as: graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

An example of the thickener included in the electrode may be carboxymethylcellulose (CMC).

As shown in FIG. 2, the electrode assembly 100 includes a separator 130. The separator 130 may be bent or folded in a zigzag shape to surround any one end of the electrodes 110 and 120. For example, as shown in FIG. 2, in a case in which the first electrode 110 and the second electrode 120 are alternately stacked, the separator 130 may be folded to surround one side end 110a of the first electrode 110, and may be folded again to surround one side end 120a of the second electrode 120 which is present on an opposite side of the one side end 110a of the first electrode 110. As such bending is repeated, the separator 130 may be bent or folded in a zigzag shape. The electrode assembly 100 may include one separator 130.

The electrode assembly 100 may be a zigzag stack-type electrode assembly in which the separator 130 is folded or folded in a zigzag shape such that one or more, specifically, two or more basic units U are stacked, in which the first electrode 110, the separator 130, the second electrode 120, and the separator 130 are sequentially stacked.

As shown in FIG. 3, the separator 130 includes the porous substrate 131 and the ceramic coating layers 132a and 132b disposed on both sides of the porous substrate.

The porous substrate 131 is not particularly limited as long as it is typically used as a separator of a secondary battery. Specifically, it is desirable that the porous substrate 131 has high moisture-retention ability for an electrolyte as well as low resistance to the transfer of electrolyte ions. More specifically, the porous substrate 131 may include at least one selected from the group consisting of a polyolefin-based resin such as polyethylene, polypropylene, polybutylene, and polypentene; a fluorine-based resin such as polyvinylidene fluoride and polytetrafluoroethylene; a polyester-based resin such as polyethylene terephthalate and polybutylene terephthalate; a polyacrylonitrile resin; and a cellulose-based resin, and may be a porous film or nonwoven fabric including any one thereof or a copolymer or mixture of two or more thereof, or a laminated structure having two or more layers thereof. The porous substrate 131 may be a porous film or nonwoven fabric including the polyolefin-based resin, or a laminated structure having two or more layers thereof.

A size and porosity of pores present in the porous substrate 131 are not particularly limited. Specifically, the porous substrate 131 may be a porous substrate that includes pores having an average pore diameter of 0.01 um to 1 um, specifically, 20 nm to 60 nm at a porosity of 10 vol% to 90 vol%, specifically, 30 vol% to 60 vol%, and, in this case, it is preferable in terms of improving mechanical strength of the porous substrate 131 and simultaneously allowing an ionic material to more smoothly move between the positive electrode and the negative electrode. The average pore diameter and porosity may be measured by analysis using a focused ion beam (FIB), a gas adsorption method, or mercury intrusion porosimetry.

A thickness of the porous substrate 131 is not particularly limited, but may specifically be 1 um to 100 um, specifically, 2 um to 15 um in consideration of appropriate mechanical strength as a separator and ease of movement of the ionic material.

The ceramic coating layers 132a and 132b are disposed on both sides of the porous substrate 131.

The ceramic coating layers 132a and 132b include inorganic particles and a binder. More specifically, the ceramic coating layer may be composed of only the inorganic particles and the binder.

The inorganic particles may be introduced in terms of preventing thermal shrinkage of the porous substrate at a high temperature and resulting short circuit between the positive electrode and the negative electrode, and the inorganic particles may be provided as a kind of spacer that may maintain a physical shape of the porous substrate and may minimize the thermal shrinkage.

The inorganic particle may be used without particular limitation as long as it does not cause an oxidation and/or reduction reaction, that is, an electrochemical reaction, due to electrochemically stable in an operating voltage range (e.g., 0 V to 5 V based on Li/Li⁺) of the battery. The inorganic particle may be lithium phosphate (Li₃PO₄); lithium titanium phosphate (LiₓTi_{y}(PO₄)₃, 0<x<2, 0<y<3); (LiAlTiP)ₓO_{y}-based glass (0<x<4, 0<y<13) such as lithium aluminum titanium phosphate (Li_{X}Al_{y}Ti₂(PO₄)₃, 0<x<2, 0<y<1, 0<z<3) and 14Li₂O-9Al₂O₃-38TiO₂-39P₂O₅; lithium lanthanum titanate (LiₓLa_{y}TiO₃, 0<x<2, 0<y<3); lithium germanium thiophosphates (LiₓGe_{y}P_{z}S_{w}, 0<x<4, 0<y<1, 0<z<1, 0<w<5) such as Li_{3.25}Ge_{0.25}P_{0.75}S₄; lithium nitrides (LiₓN_{y}, 0<x<4, 0<y<2) such as Li₃N; SiS₂-based glass (LiₓSi_{y}S_{z}, 0<x<3, 0<y<2, 0<z<4) such as Li₃PO₄-Li₂S-SiS₂; P₂S₅-based glass (LiₓP_{y}S_{z}, 0<x<3, 0<y<3, 0<z<7) such as LiI-Li₂S-P₂S₅; Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃ (PZT); Pb₁₋ₓLaₓZr_{1-y}TiyO₃ (PLZT); PB(Mg₃Nb_{2/3})O₃-PbTiO₃ (PMN-PT) ; hafnium oxide (HfO₂); and a mixture of two or more thereof. Specifically, the inorganic particle may be Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃ (PZT); Pb₁₋ₓLaₓZr_{1-y}TiyO₃ (PLZT) ; PB (Mg₃Nb_{2/3})O₃-PbTiO₃ (PMN-PT); hafnium oxide (HfO₂); and a mixture of two or more thereof, and may more specifically include at least one selected from the group consisting of Al₂O₃; AlOOH; BaTiO₂; BaSO₄; and MgO.

An average particle diameter (D₅₀) of the inorganic particles may be in a range of 0.1 um to 1 um, specifically, 0.2 um to 0.7 µm.

The inorganic particles are included in the ceramic coating layers 132a and 132b in an amount of 92 wt% or more and less than 100 wt%. The amount of the inorganic particles may be considered in relation to an amount of the binder to be described later, wherein it may be adjusted in terms of preventing an increase in resistance due to an excessive amount of the binder while preventing a decrease in thermal stability due to thermal contraction of the porous substrate. Specifically, the inorganic particles may be included in an amount of 93 wt% to 98 wt% in the ceramic coating layer.

The binder may be included in the ceramic coating layers 132a and 132b for binding the inorganic particles and for binding between the separator and the electrode.

In this case, the binder is included in the ceramic coating layer in an amount of greater than 0 wt% and equal to or less than 8 wt%. In a case in which the binder is included in an amount of greater than 8 wt%, since the binder may be excessively included in the ceramic coating layer, it may cause an increase in resistance of the secondary battery. As the binder is included in the above-described range, there is a risk of reduction in cell stiffness of the secondary battery due to a decrease in adhesion between the electrode and the separator, but, as described later, since an embodiment of the present invention uses a combination of the separator having the above-described characteristics and the gel polymer electrolyte, it is possible to simultaneously achieve an improvement in cell stiffness and mechanical durability along with an improvement in resistance of the secondary battery.

Specifically, the binder may be included in an amount of 2 wt% to 7 wt% in the ceramic coating layer, and, when the amount of the binder is within the above range, the increase in resistance of the secondary battery may be prevented while a binding force of the inorganic particles is maximally secured.

The binder may be a hydrophobic binder containing at least one hydrophobic functional group, such as a fluorine group (-F), an acrylate group (CH₂=CHCOO-), a methacrylate group (CH₂=C(CH₃)COO-) , a vinyl acetate group (-CH₂=CHOCO-), or a nitrile group (-C=N), in a molecule; or a hydrophilic binder containing at least one polar group such as a hydroxyl group (-OH), a carboxyl group (-COOH), a maleic anhydride group (-COOOC-), a sulfonic acid group (-SO₃H), or an isocyanate group (-NCO-), and any one thereof or a mixture of two or more thereof may be used. More specifically, the hydrophobic binder may be polyvinylidene fluoride, polyvinylidene fluoride-co-hexafluoropropylene, polyvinylidene fluoride-co-trichloroethylene, polymethylmethacrylate, polyacrylonitrile, polyvinylacetate, polyethylene-covinylacetate, polyimide, or polyethylene oxide. Also, the hydrophilic binder may be cyanoethylpullulan, cyanoethylpolyvinylalcohol, cyanoethylcellulose, cyanoethylsucrose, carboxyl methyl cellulose, polyvinylalcohol, polyacrylic acid, polymaleic anhydride, or polyvinylpyrrolidone.

Specifically, the binder may be an acryl-based binder. The acryl-based binder may be well dispersed with the inorganic particles during preparation of the ceramic coating layer, and, accordingly, separation of the ceramic coating layer into an upper layer of the binder and a lower layer of the inorganic particles may be prevented. Since such a layer separation consequently hinders ion movement in the negative electrode and the positive electrode and causes the increase in resistance, a resistance reduction effect aimed at by an embodiment of the present invention may be achieved to a more excellent level in a case in which the acryl-based binder is used as the binder.

The acryl-based binder may include at least one selected from the group consisting of a copolymer of ethylhexyl acrylate and methyl methacrylate; polymethylmethacrylate; polyethylhexylacrylate; polybutylacrylate; polyacrylonitrile; and a copolymer of butyl acrylate and methyl methacrylate.

The ceramic coating layer may include the inorganic particles and the binder in a weight ratio of 92:8 or more to less than 100:0, specifically, 93:7 to 98:2.

The ceramic coating layers 132a and 132b may have a thickness of 0.1 um to 10 um, particularly 0.5 um to 5 µm, and more particularly 1.0 um to 2.5 um. Since the ceramic coating layers 132a and 132b include the above-described small amount of the binder, a thin separator may be achieved, and thus, energy density of the secondary battery may be further improved and low resistance may be achieved. The thickness of the ceramic coating layer may mean a thickness of one ceramic coating layer formed on one side of the porous substrate.

The ceramic coating layers 132a and 132b may be prepared by coating a composition for forming a ceramic coating layer, in which the inorganic particles and the binder are dispersed in a solvent, on the porous substrate and drying the coated porous substrate. A method of coating the composition for forming a ceramic coating layer is not particularly limited, but dip coating, die coating, roll coating, comma coating, or gravure coating may be used, and, specifically, gravure coating may be used. Natural drying, reversible drying, or hot air drying may be used as a drying method after the coating of the composition for forming a ceramic coating layer.

A thickness of the separator 130 may be in a range of 1 um to 20 um, specifically, 5 um to 14 um, and, according to an embodiment of the present invention, since the amount of the binder in the ceramic coating layer is reduced, a thin separator may be achieved, and, accordingly, the energy density of the secondary battery may be further improved and low resistance may be achieved.

As shown in FIG. 1, the secondary battery may further include a plurality of electrode tabs 400 and 500 connected to the electrode assembly. Specifically, the plurality of electrode tabs 400 and 500 are connected to the first electrode 110 and the second electrode 120 of the electrode assembly 100, respectively, and protrude outside the battery case 300 to become a path through which electrons may move. Also, the two electrode tabs 400 and 500 are illustrated as being disposed in different directions with respect to the electrode assembly 100 in FIG. 1, but the present invention is not limited thereto, and the two electrode tabs 400 and 500 may protrude side by side in the same direction from one side of the electrode assembly 100. The plurality of electrode tabs 400 and 500 may be a positive electrode tab and a negative electrode tab, and may be connected to the positive electrode and the negative electrode, respectively.

### Gel Polymer Electrolyte 200

The gel polymer electrolyte 200 is injected or accommodated in the battery case 300 to be described later. The gel polymer electrolyte 200 may be impregnated into the electrode assembly 100 and cured to be disposed inside and outside the electrode assembly.

Since the gel polymer electrolyte 200 has no flowability and a gelated electrolyte is used, the gel polymer electrolyte 200 may improve the cell stiffness of the secondary battery. Particularly, an embodiment of the present invention may achieve a secondary battery with reduced resistance and improved cell stiffness by using the gel polymer electrolyte together with the above-described separator. In contrast, in a case in which the above-described separator and a liquid electrolyte are used, since the cell stiffness is excessively reduced, there is a risk of occurrence of product defects and processability degradation due to cell sagging and slippage of the separator and there is a possibility of explosion of the secondary battery due to reduced safety.

The gel polymer electrolyte 200 may be a cured product of a gel polymer electrolyte composition including a lithium salt, a polymerization initiator, and an oligomer compound. When the gel polymer electrolyte composition is cured, the oligomer compound may be crosslinked and cured to form an electrolyte (gel polymer electrolyte) which is cured in the form of a gel. Specifically, the gel polymer electrolyte 200 may include a cured product of the oligomer compound and a lithium salt.

The lithium salt may be used for the purpose of providing lithium ions to the secondary battery.

The lithium salt may be used without particular limitation as long as it is a compound capable of providing lithium ions which are used in the secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂, LiN(CF₃SO₂)₂, LiCl, LiI, or LiB(C₂O₄)₂ may be used. The lithium salt may be used in a concentration range of 0.1 M to 5.0 M, preferably, 0.1 M to 3.0 M. Since the electrolyte has appropriate conductivity and viscosity when the concentration of the lithium salt is included in the above range, excellent electrolyte performance may be exhibited and lithium ions may move effectively.

The polymerization initiator may be used for the purpose of forming a polymer network that is bonded in a three-dimensional structure by polymerizing the oligomer compound.

The polymerization initiator may be a photopolymerization initiator or a thermal polymerization initiator according to a polymerization method.

Specifically, as a representative example, the photopolymerization initiator may include at least one compound selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenylacetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadiene-1-yl), bis[2,6-difluoro-3-(1H-pyrrol-1-yl) phenyl]titanium, 4-isobutylphenyl-4'-methylphenyl iodonium, hexafluorophosphate, and methyl benzoylformate.

Also, as a representative example, the thermal polymerization initiator may include at least one compound selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The polymerization initiator forms a radical by being dissociated by heat at 30°C to 100°C in the secondary battery or by being dissociated by light, such as ultraviolet (UV), at room temperature (5°C to 30°C), and forms cross-linking by free radical polymerization such that an oligomer may be polymerized.

The polymerization initiator may be used in an amount of 0.001 part by weight to 10 parts by weight, preferably 0.0015 part by weight to 1 part by weight, and more preferably 0.002 part by weight to 0.7 part by weight based on 100 parts by weight of the oligomer compound. In a case in which the amount of the polymerization initiator used is within the above range, an amount of the unreacted polymerization initiator, which may adversely affect battery performance, may be minimized. Also, in a case in which the polymerization initiator is used within the above range, gelation of the electrolyte composition may be performed properly.

The oligomer compound may include at least one selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride, specifically, at least one selected from a fluorine-based oligomer, a polycarbonate-based oligomer, and a polysiloxane-based oligomer.

For example, the fluorine-based oligomer may specifically include a fluorine-based monomer derived unit. A fluorine-based functional group included in the fluorine-based oligomer may suppress oxygen radical generation due to decomposition of the positive electrode active material to further improve battery stability and the fluorine-based oligomer has an advantage of excellent flame retardancy. More specifically, the fluorine-based oligomer may include at least one selected from a tetrafluoroethylene (TFE)-vinyl acetate copolymer, an (allyl 1,1,2,2-tetrafluoroethyl ether)-(2,2,2-trifluoro ethyl acrylate) copolymer, a tetrafluoroethylene-(2-vinyl-1,3-dioxolane) copolymer, and a tetrafluoroethylene-vinyl methacrylate copolymer.

Also, the polycarbonate-based oligomer is friendly to the positive electrode, has a structure similar to that of an organic electrolyte solution, and has an advantage of excellent ionic conductivity or ionic dissociation. The polycarbonate-based oligomer may be a polycarbonate having a weight-average molecular weight of 1,000 g/mol to 50,000 g/mol, particularly 4,500 g/mol to 30,000 g/mol, and more particularly 10,000 g/mol to 25,000 g/mol.

Furthermore, the polysiloxane-based oligomer may function as a scavenger of gas (HF, etc.) generated by an electrolyte solution side reaction, and, accordingly, may have an effect of improving high-temperature storage characteristics.

The oligomeric compound may have a weight-average molecular weight of 1,000 g/mol to 50,000 g/mol, specifically, 4,500 g/mol to 30,000 g/mol.

The oligomer compound may be included in the gel polymer electrolyte composition in an amount of 1 wt% to 20 wt%, specifically, 3 wt% to 10 wt%, and, when the amount of the oligomer compound is within the above range, ion conductivity of the gel polymer electrolyte and mobility of the lithium ions may be exhibited at an excellent level while an effect of improving the cell stiffness of the secondary battery is excellently exhibited.

The gel polymer electrolyte composition may further include a solvent together with the lithium salt, the polymerization initiator, and the oligomer compound. The solvent may be used for the purpose of dissolving or dispersing the lithium salt, the polymerization initiator, and the oligomeric compound.

The solvent is one commonly used in a secondary battery, wherein, for example, ether, ester (acetates, propionates), amide, linear carbonate or cyclic carbonate, or nitrile (acetonitrile, SN, etc.) may be used alone or as a mixture of two or more thereof.

Among them, a carbonate-based solvent including a cyclic carbonate, a linear carbonate, or a carbonate compound, or a mixture thereof, may be typically used.

Specific examples of the cyclic carbonate compound may be a single compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of at least two thereof. Also, as a specific examples of the linear carbonate compound, a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of at least two thereof may typically be used, but an embodiment of the present invention is not limited thereto.

Particularly, among the carbonate-based solvents, since propylene carbonate and ethylene carbonate, as cyclic carbonates, well dissociate a lithium salt in an electrolyte solution due to high permittivity as a highly viscous organic solvent, the propylene carbonate and ethylene carbonate may be preferably used, and, since an electrolyte solution having high electrical conductivity may be prepared when the above cyclic carbonate is mixed with the low viscosity, low permittivity linear carbonate, such as ethylmethyl carbonate, diethyl carbonate, or dimethyl carbonate, in an appropriate ratio, the cyclic carbonate may be more preferably used.

Also, as the ester in the solvent, a single compound selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone, or a mixture of at least two thereof may be used, but an embodiment of the present invention is not limited thereto.

In this case, the curing of the gel polymer electrolyte composition may be performed at a temperature of 50°C to 100°C for 0.5 hours to 48 hours, and may preferably be performed at a temperature of 60°C to 80°C for 0.5 hours to 24 hours.

### Battery Case 300

The battery case 300 may be provided for the purpose of accommodating the electrode assembly 100 and the gel polymer electrolyte 200.

The battery case 300 may be a case in the form of a pouch which is formed of a material having flexibility, and, for example, may be an aluminum pouch battery case.

In a case in which the battery case 300 is the aluminum pouch battery case, the battery case 300, for example, may be formed of a pouch film that is laminated in order of a polypropylene layer (PP layer), an aluminum layer, and a polyethylene terephthalate layer (PET layer) from the inside.

The battery case 300 may include a cup portion that is an accommodation space for accommodating the electrode assembly.

The battery case 300 may include a cover 310, and, after the accommodation of the electrode assembly and the curing and gelation of the gel polymer electrolyte composition, the battery case 300 may be sealed with the cover to prepare a sealed secondary battery.

The secondary battery may be prepared by a method including the steps of accommodating an electrode assembly in a battery case; injecting a gel polymer electrolyte composition into the battery case; curing the gel polymer electrolyte composition; and sealing the battery case. After the sealing of the battery case, activation, degassing, and re-sealing processes known in the art may be further performed.

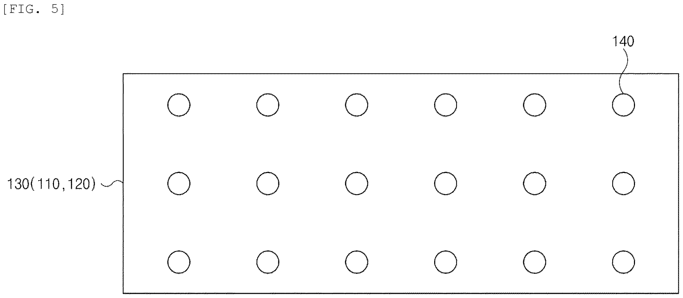

Hereinafter, a secondary battery according to another embodiment of the present invention will be described with reference to FIGS. 4 and 5. FIG. 4 is a schematic side view for explaining an electrode assembly included in the secondary battery according to the another embodiment of the present invention. FIG. 5 schematically illustrates a plan view of any one of electrodes 110 and 120 or a separator 130 which is included in the secondary battery according to the another embodiment of the present invention.

Referring to FIG. 4, the secondary battery according to the another embodiment of the present invention may be the same as the above-described secondary battery except that the electrode assembly 100 is prepared by applying an adhesive to a surface of at least one of the electrodes 110 and 120 and the separator 130 such that the electrodes 110 and 120 and the separator 130 are bonded to each other, and the adhesive is removed as the gel polymer electrolyte 200 and the electrode assembly 100 are accommodated in the battery case 300 such that an adhesive application trace 140 remains on the surface of the at least one of the electrodes 110 and 120 and the separator 130.

The adhesive may be introduced for bonding between the electrodes 110 and 120 and the separator 130. Specifically, the adhesive may be introduced to fix alignment positions of the electrodes and the separator in a process of laminating, assembling, and stacking the electrodes and the separator during a preparation process of the secondary battery. As described above, the separator 130 according to an embodiment of the present invention has a reduced binder content, wherein, since the adhesion between the electrode and the separator may not be sufficient during the preparation of the secondary battery, the adhesive may compensate for this problem to facilitate the adhesion between the electrode and the separator and prevent occurrence of a separator slippage phenomenon during a preparation process of the electrode assembly, and thus, quality and efficiency of the process may be improved.

The adhesive is used to prepare the electrode assembly by bonding the electrode and the separator, and, after the electrode assembly is accommodated in the battery case, the adhesive may be removed as the gel polymer electrolyte is accommodated. Specifically, the adhesive may be removed by being dissolved by a solvent in the gel polymer electrolyte composition for forming the gel polymer electrolyte. Since the secondary battery according to the another embodiment of the present invention uses the adhesive, the electrode and the separator may be not only easily bonded without an increase in the binder of the separator, but an increase in the thickness of the separator due to an increase in the amount of the binder may also be prevented, and thus, the energy density of the secondary battery may be further improved.

The adhesive may be applied to the surface of the at least one of the electrodes and the separator in the form of a plurality of patterns spaced apart from each other. Specifically, the adhesive may be applied to the surface of at least one of the electrodes and the separator in the form of a plurality of dots spaced apart from each other.

As shown in FIGS. 4 and 5, since the adhesive is removed by the accommodation of the gel polymer electrolyte in the battery case or the injection of the gel polymer electrolyte composition into the battery case, the adhesive application trace 140 may remain on the surface of at least one of the electrodes 110 and 120 and the separator 130. Specifically, when the gel polymer electrolyte composition is injected into the battery case in which the electrode assembly has been accommodated, the adhesive may leave the adhesive application traces while being removed by being dissolved by the solvent in the gel polymer electrolyte composition.

The dissolution or removal of the adhesive may be performed more smoothly during pressurization in the activation and degassing processes commonly involved in the preparation process of the secondary battery. The activation is a process of forming a solid electrolyte interface (SEI) layer on a surface of an electrode plate of the electrode assembly through a charging process in an initial secondary battery and charging the secondary battery, wherein the activation may be a process through which the secondary battery may supply power, and, for example, may be performed at 45°C or more, specifically, 50°C to 70°C. The degassing process is a process of discharging gas generated in the activation process to the outside, wherein the degassing process may be accompanied by a process of pressurizing the secondary battery with a jig or the like. The adhesive may be more smoothly dissolved or removed by such a temperature increase or pressurization.

An application area of the adhesive may be greater than 0% and equal to or less than 1%, specifically, 0.0001% to 0.05% of an area of a surface where the separator and the electrode are in contact with each other. When the application area of the adhesive is within the above range, it is desirable that the electrode and the separator may be bonded with sufficient adhesion and, at the same time, a problem of an increase in resistance, which is caused by the adhesive remaining without being dissolved in the solvent due to the excessive application of the adhesive, may be prevented.

The adhesive may be an acrylate-based adhesive. As the acrylate-based adhesive is used, the above-described dissolution of the adhesive may be facilitated.

Specifically, the acrylate-based adhesive may include a copolymer containing a repeating unit derived from at least one monomer selected from the group consisting of methyl methacrylate (MMA), 2-ethylhexyl acrylate (2-EHA), and 2-hydroxyethyl acrylate (2-HEA).

The copolymer may have a weight-average molecular weight (Mw) of 120,000 g/mol to 140,000 g/mol. The molecular weight of the copolymer may be measured using a conventional method known in the art. For example, the molecular weight may be measured using a terminal group quantification method in which a molecular weight is obtained by quantitatively analyzing a functional group at an end of a molecular chain, a colligative property method (membrane osmosis method, vapor pressure osmotic pressure method, etc.) using physical properties such as osmotic pressure, vapor pressure drop, boiling point elevation, and freezing point depression, a light scattering method using scattering of light, an ultracentrifugation method that measures a molecular weight by centrifuging a polymer solution and then analyzing a sedimentation rate or concentration distribution, a viscometric method using viscosity of the polymer solution, and gel permeation chromatography (GPC) using high-performance liquid chromatography (HPLC).

As shown in FIG. 4, the electrode assembly includes a plurality of electrodes 110 and 120 and one separator 130, and the separator may be folded in a zigzag shape so as to be disposed between the electrodes. Accordingly, the electrode assembly may have a form in which the electrodes 110 and 120 and the separator 130 are alternately stacked. Specifically, the electrode assembly may be one in which one or more, specifically, two or more basic units U including the separator 130, the first electrode 110, the separator 130, and the second electrode 120 are stacked. In this case, the adhesive application trace 140 is formed by application and removal of the adhesive, wherein, since it may be present on a surface where the electrodes 110 and 120 and the separator 130 are in contact with each other, it may remain on the surface of at least one of the electrodes 110 and 120 and the separator 130. With respect to the electrode assembly including the separator folded in a zigzag shape, a slippage phenomenon of the separator and/or the electrode occurs due to the bending or folding of the separator in the preparation process, and this may lead to poor quality and reduced process efficiency, but, according to an embodiment of the present invention, as the adhesive is applied for bonding the electrode and the separator, the above-described slippage phenomenon of the electrode and/or the separator may be significantly prevented, and a secondary battery with improved quality may be prepared.

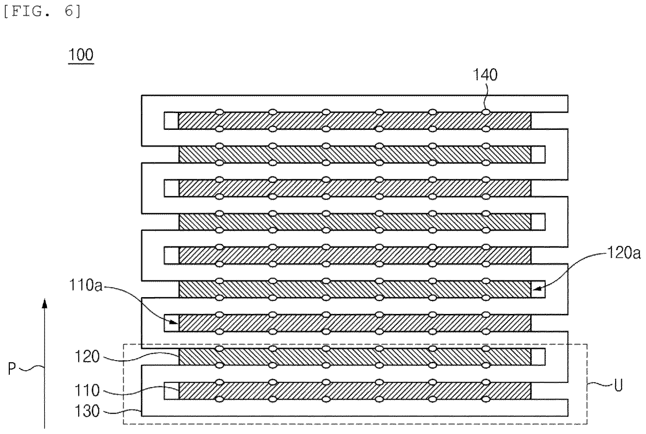

Hereinafter, a secondary battery according to another embodiment of the present invention will be described with reference to FIG. 6.

The secondary battery according to the another embodiment of the present invention may be the same as the secondary battery described with reference to FIGS. 4 and 5 except that adhesive application traces 141 and 142 disposed on layers adjacent to each other may be arranged in a crossing pattern while the adhesive application traces 141 and 142 are disposed between the electrodes 110 and 120 and the separator 130.

For example, as shown in FIG. 6, the first adhesive application trace 141 positioned between a lower portion of the first electrode 110 and the separator 130 and the second adhesive application trace 142 positioned between an upper portion of the first electrode 110 and the separator 130 may be arranged to cross each other. In this case, the positions of the first adhesive application trace 141 and the second adhesive application trace 142 cross each other, but their spacings may be equal to each other. A case of the adhesive application traces 141 and 142 positioned between the second electrode 120 and the separator 130 may also be explained in the same way.

With respect to the crossing arrangement of the adhesive application traces, it is preferable in terms of minimizing a concern of increasing a thickness of a cell due to the application of the adhesive and allowing the adhesive to be more smoothly dissolved.

### <Method of Preparing Secondary Battery>

Also, an embodiment of the present invention provides a method of preparing a secondary battery. The method of preparing a secondary battery may be the above-described method of preparing a secondary battery.

Specifically, the method of preparing a secondary battery is characterized in that it includes the steps of accommodating an electrode assembly in a battery case; injecting a gel polymer electrolyte composition into the battery case; curing the gel polymer electrolyte composition; and sealing the battery case, wherein the electrode assembly includes a first electrode and a second electrode which are alternately stacked and a separator disposed between the plurality of electrodes, wherein the separator is folded in a zigzag shape to surround any one end of the first electrode and any one end of the second electrode, and includes a porous substrate and a ceramic coating layer disposed on both sides of the porous substrate, wherein the ceramic coating layer contains 92 wt% or more and less than 100 wt% of inorganic particles and greater than 0 wt% and equal to or less than 8 wt% of a binder, and the electrode assembly is prepared by a method including the following steps (a) to (d).
(a) disposing the first electrode on the separator;
(b) covering the first electrode by folding one side of the separator;
(c) disposing the second electrode on a surface opposite to a surface of the separator where the separator and the first electrode are in contact with each other; and
(d) covering the second electrode by folding another side of the separator.

The secondary battery may be prepared by a method including the steps of accommodating an electrode assembly in a battery case; injecting a gel polymer electrolyte composition into the battery case; curing the gel polymer electrolyte composition; and sealing the battery case. After the sealing of the battery case, activation, degassing, and re-sealing processes known in the art may be further performed.

Descriptions of the electrode assembly, the first electrode, the second electrode, the separator, the battery case, and the gel polymer electrolyte composition are the same as described above.

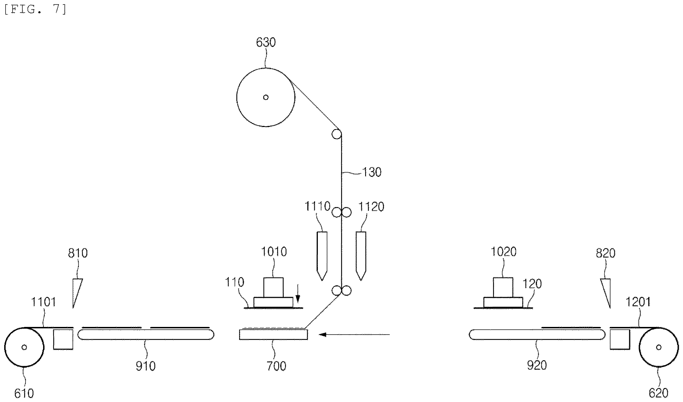

Hereinafter, with reference to FIGS. 7 to 10, a preparation process of the electrode assembly, which is included in the method of preparing a secondary battery according to an embodiment of the present invention, will be described in detail.

Referring to FIG. 7, the first electrode 110 is disposed on the separator 130.

As shown in FIG. 7, specifically, the separator 130 may be stably placed on an upper surface of a table 700 by being unwound from a separator reel 630.

The first electrode 110, as shown in FIG. 7, may be formed by cutting a first electrode sheet 1101 unwound from a first electrode reel 610 by a first cutter 810. In this case, when a first transfer device 910 transfers the first electrode 110, a first header 1010 may adsorb the first electrode. Thereafter, the first electrode 110 may be stably placed or disposed on the separator 130 according to movement of the first header 1010 and/or the table 700.

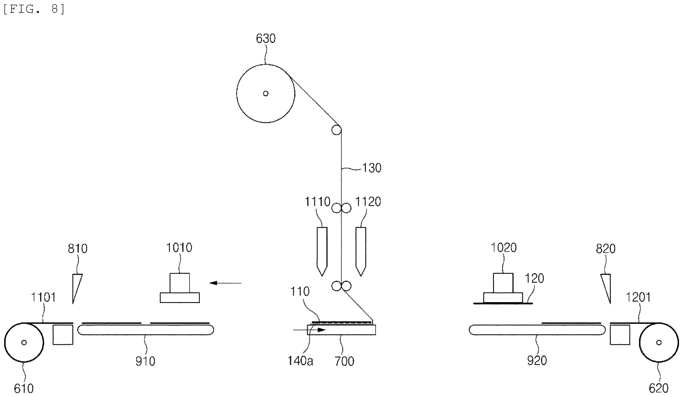

Referring to FIG. 8, after the first electrode 110 is disposed on the separator 130, one side of the separator 130 is folded to cover the first electrode 110. For example, the folding of the separator 130 may be caused by lateral movement of the table 700.

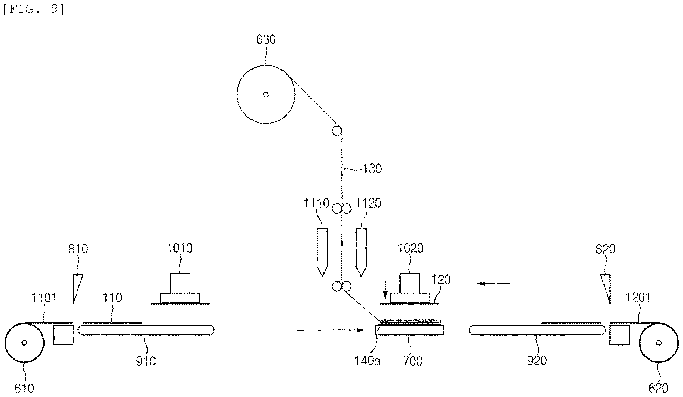

Referring to FIG. 9, the second electrode 120 is disposed on a surface opposite to a surface of the separator 130 where the separator 130 and the first electrode 110 are in contact with each other.

The second electrode 120, as shown in FIG. 9, may be formed by cutting a second electrode sheet 1201 unwound from a second electrode reel 620 by a second cutter 820. In this case, when a second transfer device 920 transfers the second electrode 120, a second header 1020 may adsorb the second electrode. Thereafter, the second electrode may be stably placed or disposed on the separator according to movement of the second header 1020 and/or the table 700.

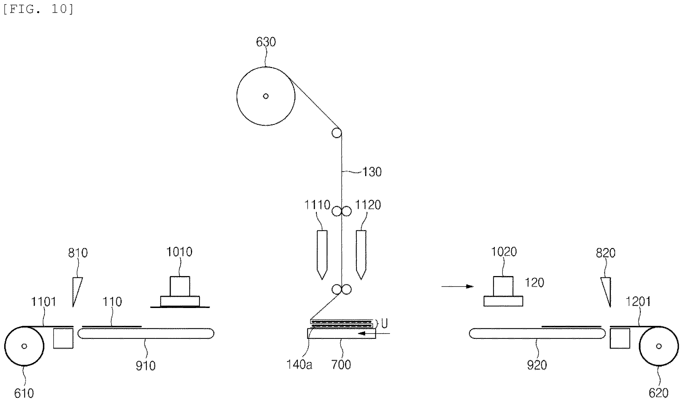

Referring to FIG. 10, after the second electrode 120 is disposed, the other side of the separator 130 is folded to cover the second electrode 120. Accordingly, an electrode assembly having a structure, in which the first electrode and the second electrode are alternately stacked, the separator is disposed between the first electrode and the second electrode, and the separator is folded in a zigzag shape, may be prepared. Thereafter, an electrode assembly, in which a plurality of first electrodes and second electrodes are alternately stacked, may be achieved by repeating the above-described process.

In the method of preparing a secondary battery an embodiment of the present invention, the disposing of the first electrode on the separator may be performed after applying an adhesive to at least a portion of the separator and the first electrode, and the disposing of the second electrode on the separator may be performed after applying an adhesive to at least a portion of the separator and the second electrode.

For example, as shown in FIGS. 7 to 10, the disposing of the first electrode 110 on the separator 130 may be performed after applying an adhesive 140a to at least a portion of the separator 130 and the first electrode 110 with a first nozzle 1110 containing the adhesive. Also, the disposing of the second electrode 120 on the separator 130 may be performed after applying the adhesive 140a to at least a portion of the separator 130 and the electrode 120 with a second nozzle 1120 containing the adhesive.

In this case, with respect to the electrode assembly including the separator that is folded in a zigzag shape as described above, the slippage phenomenon of the separator and/or the electrode occurs due to the bending or folding of the separator in the preparation process, and this may lead to poor quality and reduced process efficiency, but, according to an embodiment of the present invention, as the adhesive is applied for bonding the electrode and the separator, the above-described slippage phenomenon of the separator and/or the electrode may be significantly prevented, and a secondary battery with improved quality may be prepared. Such adhesive application is particularly preferable in terms of supplementing the adhesion of the separator of an embodiment of the present invention in which a low amount of the binder is included.

The adhesive may be applied in the form of a plurality of patterns spaced apart from each other. Specifically, the adhesive may be applied to a surface of at least one of the first electrode and the separator; and a surface of at least one of the second electrode and the separator in the form of a plurality of patterns spaced apart from each other. Specifically, the adhesive may be applied to the surface of the at least one of the first electrode and the separator; and the surface of the at least one of the second electrode and the separator in the form of a plurality of dots spaced apart from each other.

The adhesive may be removed by being dissolved in the gel polymer electrolyte composition injected into the battery case. The gel polymer electrolyte composition may further include a solvent together with the above-described lithium salt, polymerization initiator, and oligomer compound, and the adhesive may be removed by being dissolved by the solvent included in the gel polymer electrolyte composition.

Since the adhesive is removed by the accommodation of the gel polymer electrolyte in the battery case or the injection of the gel polymer electrolyte composition into the battery case, an adhesive application trace may remain on the surface of the at least one of the first electrode and the separator; and the surface of the at least one of the second electrode and the separator. Specifically, when the gel polymer electrolyte composition is injected into the battery case in which the electrode assembly has been accommodated, the adhesive may leave the adhesive application traces while being removed by being dissolved by the solvent in the gel polymer electrolyte composition.

The dissolution or removal of the adhesive may be performed more smoothly during pressurization in the activation and degassing processes commonly involved in the preparation process of the secondary battery. The activation is a process of forming a solid electrolyte interface (SEI) layer on the surface of the electrode plate of the electrode assembly through a charging process in an initial secondary battery and charging secondary battery, wherein the activation may be a process through which the secondary battery may supply power, and, for example, may be performed at 45°C or more, specifically, 50°C to 70°C. The degassing process is a process of discharging gas generated in the activation process to the outside, wherein the degassing process may be accompanied by a process of pressurizing the secondary battery with a jig or the like. The adhesive may be more smoothly dissolved or removed by such a temperature increase or pressurization.

The adhesive may be an acrylate-based adhesive. As the acrylate-based adhesive is used, the above-described dissolution and removal of the adhesive may be facilitated.

Specifically, the acrylate-based adhesive may include a copolymer containing a repeating unit derived from at least one monomer selected from the group consisting of methyl methacrylate (MMA), 2-ethylhexyl acrylate (2-EHA), and 2-hydroxyethyl acrylate (2-HEA).

The copolymer may have a weight-average molecular weight (Mw) of 120,000 g/mol to 140,000 g/mol. The molecular weight of the copolymer may be measured using a conventional method known in the art. For example, the molecular weight may be measured using a terminal group quantification method in which a molecular weight is obtained by quantitatively analyzing a functional group at an end of a molecular chain, a colligative property method (membrane osmosis method, vapor pressure osmotic pressure method, etc.) using physical properties such as osmotic pressure, vapor pressure drop, boiling point elevation, and freezing point depression, a light scattering method using scattering of light, an ultracentrifugation method that measures a molecular weight by centrifuging a polymer solution and then analyzing a sedimentation rate or concentration distribution, a viscometric method using viscosity of the polymer solution, and gel permeation chromatography (GPC) using high-performance liquid chromatography (HPLC).

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example and Comparative Examples

### Example 1

### 1. Preparation of Separator

A composition for forming a ceramic coating layer was prepared by adding Al₂O₃ (average particle diameter (D₅₀): 0.5 um), as inorganic particles, and an acryl-based binder to water, as a solvent, in a weight ratio of 96:4. As the acryl-based binder, a mixture of product name TRD 202A by JSR Micro and product name AP-0821 by APEC was used.

A ceramic coating layer (thickness of one layer: 1.5 µm) was formed by coating both sides of a polyethylene porous substrate (thickness: 9 µm, average pore diameter: 0.05 um, porosity: 45 vol%) with the composition for forming a ceramic coating layer by gravure coating and drying to prepare a separator (thickness: 12 µm = 1.5 µm+9 pm+1.5 µm).

### 2. Preparation of Electrode Assembly

The separator was stably placed on a table by unwinding a separator reel on which the separator was wound. An adhesive was applied to the separator in a pattern in the form of a plurality of dots spaced apart from each other using a first nozzle. An application area (5.8875 mm²) of the adhesive was 0.002366% of an area (24,889 mm²) of a surface where the separator and a positive electrode are in contact with each other. The adhesive was an acrylate-based adhesive that is a copolymer containing repeating units derived from methyl methacrylate (MMA), 2-ethylhexyl acrylate (2-EHA), and 2-hydroxyethyl acrylate (2-HEA) in a weight ratio of 40:30:30. Thereafter, a positive electrode sheet was unwound from a first electrode reel on which the positive electrode sheet was wound and then cut with a first cutter to prepare a positive electrode, and the positive electrode was adsorbed to a first header by being transferred by a first transfer device. The positive electrode was attached to the separator by moving the first header toward the table.

Thereafter, the table was moved laterally, and the separator was folded to one side to cover the positive electrode.

Thereafter, the same adhesive as that used above was applied to a surface (surface opposite to the surface where the separator and the positive electrode are in contact with each other) of the separator in a pattern in the form of a plurality of dots spaced apart from each other using a second nozzle.

Thereafter, a negative electrode sheet was unwound from a second electrode reel on which the negative electrode sheet was wound and then cut with a second cutter to prepare a negative electrode, and the negative electrode was adsorbed to a second header by being transferred by a second transfer device. The negative electrode was attached to the surface (the surface opposite to the surface where the separator and the positive electrode are in contact with each other) of the separator by moving the second header toward the table.

Thereafter, the table was again moved laterally, and the separator was folded to another side to cover the negative electrode.

An electrode assembly, in which 18 basic units, in which the separator/the positive electrode/the separator/the negative electrode are sequentially stacked, were stacked, was prepared by repeating the above process several times. In this case, the separator was folded in a zigzag shape.

In this case, with respect to the positive electrode, Li[Ni_{0.8}Co_{0.1}Mn_{0.1}]O₂ as a positive electrode active material, PVdF as a binder, and carbon black, as a conductive agent, were added to N-methylpyrrolidone (NMP), as a solvent, in a weight ratio of 97.5:1.5:1.0 to prepare a positive electrode slurry, and one, in which a positive electrode active material layer was formed by coating both sides of an aluminum current collector, as a positive electrode current collector, with the positive electrode slurry and drying and rolling the coated positive electrode current collector, was used as the positive electrode.

Also, with respect to the negative electrode, graphite as a negative electrode active material, a styrene-butadiene rubber as a binder, carbon black as a conductive agent, and carboxymethylcellulose (CMC) as a thickener, were added to water as a solvent, in a weight ratio of 95.5:2.5:1.0:1.0 to prepare a negative electrode slurry, and one, in which a negative electrode active material layer was formed by coating both sides of a copper current collector, as a negative electrode current collector, with the negative electrode slurry and drying and rolling the coated negative electrode current collector, was used as the negative electrode.

### 3. Preparation of Gel Polymer Electrolyte Composition

A gel polymer electrolyte composition was prepared by mixing polycarbonate (weight-average molecular weight Mw: 20,000) as an oligomer, LiPF₆ as a lithium salt, and azobisisobutyronitrile (AIBN), as a polymerization initiator, in a solvent.

The solvent was a mixture of ethyl carbonate (EC) and ethyl methyl carbonate (EMC) in a volume ratio of 3:7, the lithium salt was included at a concentration of 1.0 M in the gel polymer electrolyte composition, the oligomer was included in an amount of 5 wt% in the gel polymer electrolyte composition, and the polymerization initiator was included in an amount of 0.6 part by weight based on 100 parts by weight of the oligomer in the gel polymer electrolyte composition.

### 4. Preparation of Secondary Battery

A pouch-type battery case formed of aluminum was prepared as a battery case, and the electrode assembly was accommodated in an accommodation space of the battery case.

Thereafter, the gel polymer electrolyte composition was injected into the battery case in which the electrode assembly had been accommodated. After the injection of the gel polymer electrolyte composition, vacuum sealing was performed.

As the gel polymer electrolyte composition was injected, the adhesive present in the electrode assembly was removed by being dissolved by the solvent of the gel polymer electrolyte composition. As will be described later, the adhesive was removed such that adhesive application traces remained on the separator and the electrode.

Thereafter, the gel polymer electrolyte composition, which had been injected into the battery case, was cured. The curing was performed by performing a heat treatment at a temperature of 60°C for 5 hours.

Thereafter, a secondary battery was prepared by cooling, sealing, and degassing the battery case. A thickness of the secondary battery was 0.8 cm.

### Comparative Example 1

### 1. Preparation of Separator

A composition for forming a ceramic coating layer was prepared by adding Al₂O₃ (average particle diameter (D₅₀): 0.5 um), as inorganic particles, and PVDF, as a binder, to acetone, as a solvent, in a weight ratio of 70:30.

A ceramic coating layer (thickness of one layer: 3 µm) was formed by coating both sides of a polyethylene porous substrate (thickness: 9 µm, average pore diameter: 0.05 um, porosity: 45 vol%) with the composition for forming a ceramic coating layer by gravure coating and drying to prepare a separator (thickness: 15 µm = 3 µm+9 µm+3 pm).

### 2. Preparation of Electrode Assembly

A secondary battery was prepared in the same manner as in Example 1 except that, unlike Example 1, no adhesive was applied, and the above-prepared separator was used.

### 3. Preparation of Liquid Electrolyte Composition

A liquid electrolyte composition was prepared by using a mixture of ethyl carbonate (EC) and ethyl methyl carbonate (EMC) in a volume ratio of 30:70 as a solvent, and adding a LiPF₆ lithium salt into the solvent at a concentration of 1.0 M.

### 4. Preparation of Secondary Battery

A pouch-type battery case formed of aluminum was prepared as a battery case, and the above-prepared electrode assembly was accommodated in an accommodation space of the battery case.

Thereafter, the above-prepared liquid electrolyte composition was injected, and vacuum sealing was performed.

A secondary battery was prepared by cooling, sealing, and degassing the battery case.

A thickness of the secondary battery was 0.8 cm.

### Comparative Example 2

### 1. Preparation of Separator

The same as the separator prepared in Comparative Example 1 was used.

### 2. Preparation of Electrode Assembly

The same as the electrode assembly prepared in Comparative Example 1 was used.

### 3. Preparation of Gel Polymer Electrolyte Composition

The same as the gel polymer electrolyte composition prepared in Example 1 was used.

### 4. Preparation of Secondary Battery

A secondary battery was prepared in the same manner as in Example 1 except that the above-prepared separator and electrode assembly were used.

A thickness of the secondary battery was 0.8 cm.

### Comparative Example 3

### 1. Preparation of Separator

The same as the separator prepared in Example 1 was used.

### 2. Preparation of Electrode Assembly

The same as the electrode assembly prepared in Example 1 was used.

### 3. Preparation of Liquid Electrolyte Composition

The same as the liquid electrolyte composition prepared in Comparative Example 1 was used.

### 4. Preparation of Secondary Battery

A secondary battery was prepared in the same manner as in Comparative Example 1 except that the above-prepared separator and electrode assembly were used.

A thickness of the secondary battery was 0.8 cm.

### Experimental Examples

### 1. Observation of Adhesive Application Traces on the Surface of the Separator

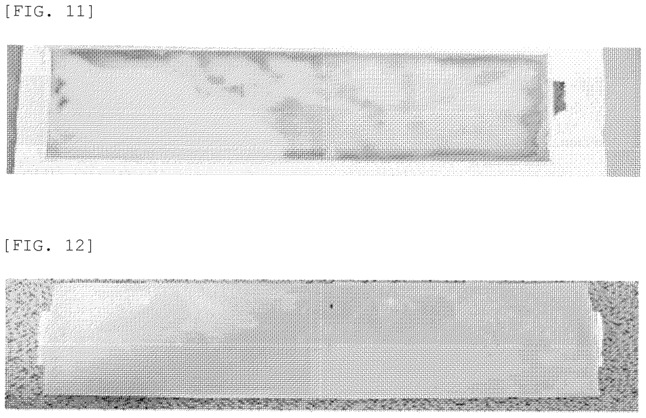

In the secondary batteries of Example 1 and Comparative Example 1, the separator corresponding to a surface where the electrode and the separator were in contact with each other was cut, and the surface was observed. A photograph of the surface of the separator separated from the secondary battery of Example 1 is illustrated in FIG. 11, and a photograph of the surface of the separator separated from the secondary battery of Comparative Example 1 is illustrated in FIG. 12.

As may be seen in FIG. 11, adhesive application traces were observed in the photograph of the surface of the separator of Example 1.

As may be seen in FIG. 12, since the adhesive was not used in the preparation of the electrode assembly of Comparative Example 1, adhesive application traces were not observed in the photograph of the surface of the separator of Comparative Example 1.

### 2. Resistance Evaluation

In the secondary batteries of Example 1 and Comparative Examples 1 to 3, resistance values were calculated using voltage changes (ΔV) which were measured when the secondary batteries were discharged at 2.5 C rate for 10 seconds at a state of charge (SOC) of 50%, and the results thereof are presented in Table 1 below.

### 3. Life Performance Evaluation

The above-prepared secondary batteries of Example 1 and Comparative Examples 1 to 3 were charged and discharged for 100 cycles at 45°C under the following conditions to evaluate capacity retentions in a 100^{th} cycle.

### * Charging and discharging conditions

Charging: constant current/constant voltage (CC/CV) mode; 0.33 C; 4.2 V, 1/20 C cut-off
Discharging: CC mode; 0.33 C; 2.5 V cut-off

A value, which was obtained by dividing discharge capacity in the 100^{th} cycle by discharge capacity in the first cycle under the above experimental conditions, was defined as the capacity retention. The results thereof are presented in Table 1 below.

### 4. Cell Stiffness Measurement

A stress value, when a displacement of 2 mm was applied by applying a downward force to the center of each secondary battery at a rate of 10 mm/min according to a 3-point bending method, was measured. In this case, a pre-load applied was 30 gf, the experiment was performed at room temperature, and the stress value was measured with a universal testing machine (UTM). The results thereof are presented in Table 1 below.

### 5. Nail Penetration Test

After a metal nail having a diameter of 3.0 mm was dropped at a speed of 800 mm/min on each of the fully-charged lithium secondary batteries prepared in Example 1 and Comparative Examples 1 to 3, a thermos-couple was attached to a surface of the secondary battery to evaluate whether or not ignition occurred.

The test was performed a total of three times, and a case, in which the secondary battery did not ignite, was evaluated as Pass. The results thereof are presented in Table 1 below.

**[Table 1]**

| | Experimental Example 2 | Experimental Example 3 | Experimental Example 4 | Experimental Example 5 |
|---|---|---|---|---|
| | Resistance (mΩ) | 100^{th} cycle capacity retention (%) | Cell stiffness | Nail penetration evaluation (Pass/Total) |
| Example 1 | 2.19 | 99.1 | 4.25 | 3/3 |
| Comparative Example 1 | 2.20 | 98.1 | 3.70 | 1/3 |
| Comparative Example 2 | 2.35 | 95.8 | 6.81 | 3/3 |
| Comparative Example 3 | 2.03 | 99.5 | 2.85 | 0/3 |

Referring to Table 1, it may be confirmed that the secondary battery of Example 1 according to an embodiment of the present invention exhibited excellent effects of reducing resistance, improving lifetime, increasing cell stiffness, and improving safety at the same time.

With respect to Comparative Example 1, it may be confirmed that resistance was equivalent to that of Example 1, but cell stiffness and safety were reduced and life performance was degraded.

Also, with respect to Comparative Example 2, cell stiffness was excellent, but resistance was increased by 6.8% in comparison to that of Example 1 as the separator using a large amount of the binder and the gel polymer electrolyte were used together, and life performance was significantly degraded.

Furthermore, with respect to Comparative Example 3, resistance was somewhat lower than that of Example 1, but cell stiffness was significantly reduced, and, particularly, it may be confirmed that it was poor in terms of safety because all were ignited during the nail penetration test.

### [Description of the Symbols]

10: Secondary Battery
100: Electrode Assembly
U: Basic unit
110: First Electrode
110a: One Side End of the First Electrode
120: Second Electrode
120a: One Side End of the Second Electrode
130: Separator
131: Porous Substrate
132a, 132b: Ceramic Coating Layers
140, 141, 142: Adhesive Application Traces
140a: Applied Adhesive
200: Gel Polymer Electrolyte
300: Battery Case
310: Cover
400, 500: Electrode Tabs
610: First Electrode Reel
620: Second Electrode Reel
630: Separator Reel
700: Table
810: First Cutter
820: Second Cutter
910: First Transfer Device
920: Second Transfer Device
1010: First Header
1020: Second Header
1101: First Electrode Sheet
1201: Second Electrode Sheet
1110: First Nozzle
1120: Second Nozzle
P: Vertical Direction Relative to the Ground

## Claims

1. A secondary battery comprising:
an electrode assembly including an electrode and a separator which are alternately stacked;
a gel polymer electrolyte; and
a battery case accommodating the electrode assembly and the gel polymer electrolyte,
wherein the separator comprises a porous substrate and a ceramic coating layer disposed on both sides of the porous substrate, and
the ceramic coating layer contain 92 wt% or more and less than 100 wt% of inorganic particles and greater than 0 wt% and equal to or less than 8 wt% of a binder.

2. The secondary battery of claim 1, wherein the electrode is plural in number,
the plurality of electrodes are stacked in a vertical direction, and
the separator is folded in a zigzag shape to surround any one end of the electrode.

3. The secondary battery of claim 1, wherein the ceramic coating layer contains 93 wt% to 98 wt% of the inorganic particles and 2 wt% to 7 wt% of the binder.

4. The secondary battery of claim 1, wherein the binder comprises an acryl-based binder.

5. The secondary battery of claim 3, wherein the acryl-based binder comprises at least one selected from the group consisting of a copolymer of ethylhexyl acrylate and methyl methacrylate; polymethylmethacrylate; polyethylhexylacrylate; polybutylacrylate; polyacrylonitrile; and a copolymer of butyl acrylate and methyl methacrylate.

6. The secondary battery of claim 1, wherein the ceramic coating layer has a thickness ranging from 0.1 um to 10 µm.

7. The secondary battery of claim 1, wherein the separator has a thickness ranging from 1 um to 20 µm.

8. The secondary battery of claim 1, wherein the gel polymer electrolyte is a cured product of a gel polymer electrolyte composition including a lithium salt, a polymerization initiator, and an oligomer compound.

9. The secondary battery of claim 8, wherein the oligomer compound is included in an amount ranging from 1 wt% to 20 wt% in the gel polymer electrolyte composition.

10. The secondary battery of claim 8, wherein the oligomer compound comprises at least one selected from the group consisting of a fluorine-based oligomer, a polycarbonate-based oligomer, and a polysiloxane-based oligomer.

11. The secondary battery of claim 1, wherein the electrode assembly is prepared by applying an adhesive to a surface of at least one of the electrode and the separator such that the electrode and the separator are bonded to each other, and the adhesive is removed as the gel polymer electrolyte and the electrode assembly are accommodated in the battery case such that an adhesive application trace remains on the surface of the at least one of the electrode and the separator.

12. The secondary battery of claim 11, wherein the adhesive is applied to the surface of the at least one of the electrode and the separator in a form of a plurality of patterns spaced apart from each other.

13. The secondary battery of claim 11, wherein an application area of the adhesive is greater than 0% and equal to or less than 1% of an area of a surface where the separator and the electrode are in contact with each other.

14. The secondary battery of claim 1, wherein the electrode comprises a first electrode and a second electrode, and
the first electrode and the second electrode are alternatingly stacked.

15. A method of preparing a secondary battery, the method comprising:
accommodating an electrode assembly in a battery case;
injecting a gel polymer electrolyte composition into the battery case;
curing the gel polymer electrolyte composition; and
sealing the battery case,
wherein the electrode assembly comprises a first electrode and a second electrode which are alternately stacked and a separator disposed between the plurality of electrodes,
wherein the separator is folded in a zigzag shape to surround any one end of the first electrode and any one end of the second electrode, and
the separator comprises a porous substrate and a ceramic coating layer disposed on both sides of the porous substrate,
wherein the ceramic coating layer contains 92 wt% or more and less than 100 wt% of inorganic particles and greater than 0 wt% and equal to or less than 8 wt% of a binder, and
the electrode assembly is prepared by a method including steps (a) to (d):
(a) disposing the first electrode on the separator;
(b) covering the first electrode by folding one side of the separator;
(c) disposing the second electrode on a surface opposite to a surface of the separator where the separator and the first electrode are in contact with each other; and
(d) covering the second electrode by folding another side of the separator.

16. The method of claim 15, wherein the disposing of the first electrode on the separator is performed after applying an adhesive to at least a portion of the separator and the first electrode, and
the disposing of the second electrode on the separator is performed after applying an adhesive to at least a portion of the separator and the second electrode.

17. The method of claim 16, wherein the adhesive is applied in a form of a plurality of patterns spaced apart from each other.

18. The method of claim 16, wherein the adhesive is removed by being dissolved in the gel polymer electrolyte composition that is injected into the battery case.

19. The method of claim 18, wherein, after the adhesive is removed, an adhesive application trace is present on a surface of at least one of the first electrode and the separator; and a surface of at least one of the second electrode and the separator.

20. The method of claim 16, wherein the adhesive is an acrylate-based adhesive.
